# EUROPÄISCHE PATENTSCHRIFT

(11) **EP 2 651 742 B1**
(45) Veröffentlichungstag und Bekanntmachung des Hinweises auf die Patenterteilung: **02.03.2016**
(21) Anmeldenummer: 11807650.4
(22) Anmeldetag: 09.12.2011
(51) Int. Cl.: B61L 19/02, B61L 19/06

(54) **UMSETZERANORDNUNG FÜR EIN MECHANISCHES STELLWERK**
CONVERTER ARRANGEMENT FOR A MECHANICAL ACTUATOR
DISPOSITIF DE CONVERSION POUR POSTE D'AIGUILLAGE MANUEL

(30) Priorität: 16.12.2010 DE 102010063257
(43) Veröffentlichungstag der Anmeldung: 23.10.2013
(73) Patentinhaber: Siemens Aktiengesellschaft, 80333 München (DE)
(72) Erfinder: SIEVERDING, Peter, 38159 Vechelde (DE)
(86) Internationale Anmeldenummer: PCT/EP2011/072301
(87) Internationale Veröffentlichungsnummer: WO 2012/080114

(56) Entgegenhaltungen:
- DE-A1- 1 961 972
- DE-A1-102006 025 523
- WILHELM SCHMITZ: "Security of Interlocking Systems for Railroad Track Switching", ELECTRICAL COMMUNICATION,, Bd. 42, Nr. 4, 1. Januar 1967 (1967-01-01) , Seiten 524-540, XP001389951,
- KUHBIER ET AL: "Von der Handweiche zum elektronischen Stellwerk", ETR EISENBAHNTECHNISCHE RUNDSCHAU, HESTRA-VERLAG. DARMSTADT, DE, Nr. 6, 1. Juni 2010 (2010-06-01), Seiten 374-379, XP009137753, ISSN: 0013-2845

## Beschreibung

Die Erfindung betrifft ein Stellwerk mit mindestens einer mechanischen Betätigungseinrichtung, an der mindestens ein Betätigungsseil zum Betätigen von Feldelementen in der Außenanlage des Stellwerks befestigt ist. Dabei werden unter Feldelementen Weichen und Signaleinrichtungen verstanden.

Ein solches Stellwerk ist allgemein bekannt, beispielsweise aus Wilhelm Schmitz: "Security of Interlocking Systems for Railroad Track Switching", Electrical Communication, Bd. 42, Nr. 4, 1. Januar 1967 (1967-01-01), Seiten 524-540, XP001389951, und bis heute in großer Anzahl noch in Betrieb. Bei diesem bekannten Stellwerk in mechanischer Ausführung werden über in der Regel mehrere Betätigungseinrichtungen in Form von Hebeln als Stahlseile ausgeführte Betätigungsseile längs bewegt, die mit Weichen und mechanischen Signaleinrichtungen in der Außenanlage des Stellwerks verbunden sind. Die Stahlseile müssen regelmäßig gewartet und ausgetauscht werden, was mit hohen Kosten verbunden ist.

Der Erfindung liegt die Aufgabe zugrunde, ein Stellwerk vorzuschlagen, das vergleichsweise wartungsarm ausgebildet ist.

Zur Lösung dieser Aufgabe ist bei dem Stellwerk der eingangs angegebenen Art erfindungsgemäß das Betätigungsseil zu einer mechanisch-elektronischen Umsetzeranordnung geführt, von der mindestens eine elektrische Leitung zu elektronischen Systemen der Feldelemente in der Außenanlage des Stellwerks verläuft.

Ein wesentlicher Vorteil des erfindungsgemäßen Stellwerkes besteht darin, dass es gewissermaßen halbelektronisch unter Beibehaltung wesentlicher mechanischer Elemente der Innenanlage eines mechanischen Stellwerks aufgebaut ist, indem die Betätigungseinrichtung in Form der Hebel erhalten bleibt und auch das Betätigungsseil zu einem kleinen, am Hebel angreifenden Anteil weiterbenutzt wird. Ein weiterer Vorteil wird darin gesehen, dass nur eine mechanisch-elektronische Umsetzeranordnung vorzusehen ist, von der mindestens eine weitestgehend wartungsarme elektrische Leitung zu elektronischen Systemen der Feldelemente der Außenanlage, wie Weichen und Signaleinrichtungen, geführt ist. Die dazu erforderliche Umrüstung der Signaleinrichtungen und Weichen lässt sich dabei insofern kostengünstig durchführen, als dabei auf elektronische Systeme von solchen Feldelementen zurückgegriffen werden kann, wie sie bei elektronischen Stellwerken üblich sind. Ein zusätzlicher Vorteil besteht darin, dass sich aus der Sicht der jeweiligen Bedienungsperson des Stellwerks nichts ändert, weil diese Bedienungsperson weiterhin die Betätigungselemente in gewohnter Weise vor sich hat; eine besondere Einweisung in das erfindungsgemäße Stellwerk ist somit nicht erforderlich.

Bei einer vorteilhaften Ausgestaltung des mechanischen Stellwerks gemäß der Erfindung ist die mechanisch-elektronische Umsetzeranordnung in der Innenanlage des Stellwerks untergebracht, weil dann nicht nur das Betätigungsseil vorteilhaft kurz sein kann, sondern auch vor Korrosion durch Witterungseinflüsse geschützt ist.

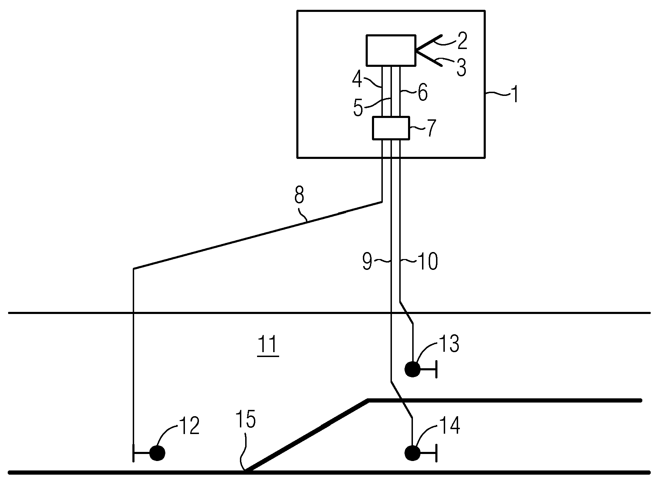

Zur weiteren Erläuterung der Erfindung ist in der Figur ein schematisch dargestelltes Ausführungsbeispiel des erfindungsgemäßen Stellwerks gezeigt.

Wie die Figur erkennen lässt, sind in einer Innenanlage 1 eines ansonsten nicht weiter dargestellten Stellwerks mehrere als Hebel ausgebildete Betätigungselemente 2 und 3 untergebracht; das Betätigungselement 2 ist dabei in seiner Ruhelage gezeigt, während das Betätigungselement 3 aktiviert ist; ein weiteres Betätigungselement ist nicht erkennbar. Von jedem der drei Betätigungselemente führt ein Betätigungsseil 4, 5 und 6 in Form eines kurzen Stahlseilstücks zu einer mechanisch-elektrischen Umsetzeranordnung 7, die ebenfalls in der Innenlage untergebracht ist, so dass die Betätigungsseile vor schädlichen Umwelteinflüssen geschützt sind.

Die mechanisch-elektronische Umsetzeranordnung 7 erzeugt abhängig von der jeweils durch die Betätigungseinrichtungen bewirkten Stellung der Betätigungsseile 4,5 und 6 ein Signal S1, S2 und S3. Diese Signale S1, S2 und S3 werden über jeweils eine elektrische Leitung 8, 9 und 10 in die Außenanlage 11 des Stellwerks übertragen und enden an nicht näher dargestellten elektronischen Systemen von in der Figur nur schematisch dargestellten Signaleinrichtungen 12, 13 und 14.

In entsprechender Weise kann eine ebenfalls nur schematisch gezeigte Weiche 15 als ein weiteres Feldelement über ihr elektronisches System angesteuert werden.

Als elektronische Systeme kommen elektronische Bausteine in frage, wie sie bei elektronischen Stellwerken Verwendung finden.

## Patentansprüche

1. Stellwerk mit mindestens einer mechanischen Betätigungseinrichtung (2,3), an der mindestens ein Betätigungsseil (3,5,6) zum Betätigen von Feldelementen (12,13,14,15) in der Außenanlage (11) des Stellwerks befestigt ist,
**dadurch gekennzeichnet, dass**
das Betätigungsseil (4,5,6) zu einer mechanisch-elektronischen Umsetzeranordnung (7) geführt ist, von der mindestens eine elektrische Leitung (8,9,10) zu elektronischen Systemen der Feldelemente (12,13,14,15) der Außenanlage (11) des Stellwerks verläuft.

2. Stellwerk nach Anspruch 1,
**dadurch gekennzeichnet, dass**
die mechanisch-elektronische Umsetzeranordnung (7) in der Innenanlage (1) des Stellwerks untergebracht ist.

## Claims

1. Actuator having at least one mechanical activation device (2, 3), to which at least one activation cable (3, 5, 6) for activating field elements (12, 13, 14, 15) in the external system (11) of the actuator is mounted,
**characterised in that**
the activation cable (4, 5, 6) is guided to a mechanical-electronic converter arrangement (7), from which at least one electrical line (8, 9, 10) leads to electronic systems of the field elements (12, 13, 14, 15) of the external system (11) of the actuator.

2. Actuator according to claim 1,
**characterised in that**
the mechanical-electronic converter arrangement (7) is accommodated in the internal system (1) of the actuator.

## Revendications

1. Poste d'aiguillage ayant au moins un dispositif (2, 3) d'actionnement mécanique, auquel est fixé au moins un câble (3, 5, 6) d'actionnement pour l'actionnement d'éléments (12, 13, 14, 15) de terrain de l'installation (11) extérieure du poste d'aiguillage,
**caractérisé en ce que**
le câble (4, 5, 6) d'actionnement mène à un dispositif (7) transducteur mécano-électronique, duquel au moins une ligne (8, 9, 10) électrique va à des systèmes électroniques des éléments (12, 13, 14, 15) de terrain de l'installation (11) extérieur du poste d'aiguillage.

2. Poste d'aiguillage suivant la revendication 1,
**caractérisé en ce que**
l'agencement (7) transducteur mécanique-électronique est logé dans l'installation (1) intérieure du poste d'aiguillage.
